# EUROPEAN PATENT APPLICATION

(11) **EP 4 566 479 A1**
(43) Date of publication of application: **11.06.2025**
(21) Application number: 24216736.9
(22) Date of filing: 02.12.2024
(51) Int. Cl.: A44C 5/10, A44C 27/00, B22C 7/02, B33Y 80/00, B22D 25/02, A44C 11/00, A44C 17/04, B22C 9/30

(54) **METHOD FOR MAKING A JEWELLERY ITEM**

(30) Priority: 04.12.2023 IT 202300025809
(71) Applicant: Scialpi Design S.r.l., 15048 Valenza (AL) (IT)
(72) Inventor: SCIALPI, Giacinto, 15048 Valenza (AL) (IT)
(74) Representative: Torredimare, Luca

(57) **Abstract**

Method for making a jewellery item, which comprises the steps of: making a 3D print of a prototype having the desired shape of the item (2), obtaining a mould from the prototype, pouring a material in melted state into the mould, leaving such melted material to solidify, removing the solidified material from the mould. The item (2) has an outer surface comprising a plurality of links (4) having a complementary shape and intersecting each other, wherein the shape of the links (4) prevents them from separating.

## Description

### Technical field

The present invention relates to a method for making a jewellery item, such as a bracelet, a necklace, or a ring.

### Technical background

It is known in the art of jewellery to make objects using a 3D printing process. Generally, the method includes the steps of: making a 3D print of a prototype having the desired shape, obtaining a mould from the prototype, pouring a material in melted state into the mould, and finally removing the object.

The invention aims at providing a method which can yield a jewellery item which is both strong and pliable.

### Summary of the invention

It is one object of the present invention to provide a method for making a jewellery item which can overcome this and other drawbacks of the prior art while at the same time being simple and economical to carry out.

According to the present invention, this and other objects are achieved through a method as set out in the appended independent claim. The invention also concerns a jewellery item made by using such method.

It is understood that the appended claims are an integral part of the technical teachings provided in the following detailed description of the present invention. In particular, the appended dependent claims define some preferred embodiments of the present invention that include some optional technical features.

### Brief description of the drawings

Further features and advantages of the present invention will become apparent in light of the following detailed description, provided merely as a non-limiting example with reference to the annexed drawings, wherein:
- Figure 1 is a front view of a portion of a jewellery item and of a link of such item according to a particular embodiment of the present invention;
- Figure 2 is a perspective view of two portions of jewellery items according to further embodiments of the present invention;
- Figure 3 is a front view of a portion of a jewellery item according to a further embodiment of the present invention;
- Figure 4 is a front view of a portion of a jewellery item according to a further embodiment of the present invention;
- Figure 5 is a cross-sectional view along line V-V of Figure 4.
- Figure 6 is a perspective view of a longitudinal section of a link, according to a particular embodiment of the present invention;
- Figure 7 shows the link of Figure 6 connected to an adjacent link;
- Figures 8 and 9 are front views of portions of jewellery items with respective auxiliary supports according to further embodiments of the present invention;
- Figure 10 shows a ring made by using the method of the invention;
- Figure 11 shows a plurality of cross-sections of different jewellery items according to some possible variants of the invention;
- Figures 12a and 12b are, respectively, a perspective view and a front view of a portion of a jewellery item according to a further embodiment of the present invention;
- Figure 13 is a perspective view of a longitudinal section of a link according to a particular embodiment of the present invention.

### Detailed description of the invention

With reference to the annexed drawings, described herein is a method for making a jewellery item 2 having an outer surface comprising a plurality of links 4 having a complementary shape and intersecting each other. The shape of links 4 prevents them from separating.

Item 2 may be, by way of non-limiting example, a necklace, a bracelet, a ring, etc. Item 2 may be of the openable type, so that it can be worn by a user, or it may comprise elastic means (e.g. an elastic cord) allowing item 2 (e.g. a bracelet) to be widened and worn by the user. The opening and closing means, as well as the elastic means, may be per se known. The invention also concerns an item 2 made in accordance with any one of the variants of the invention.

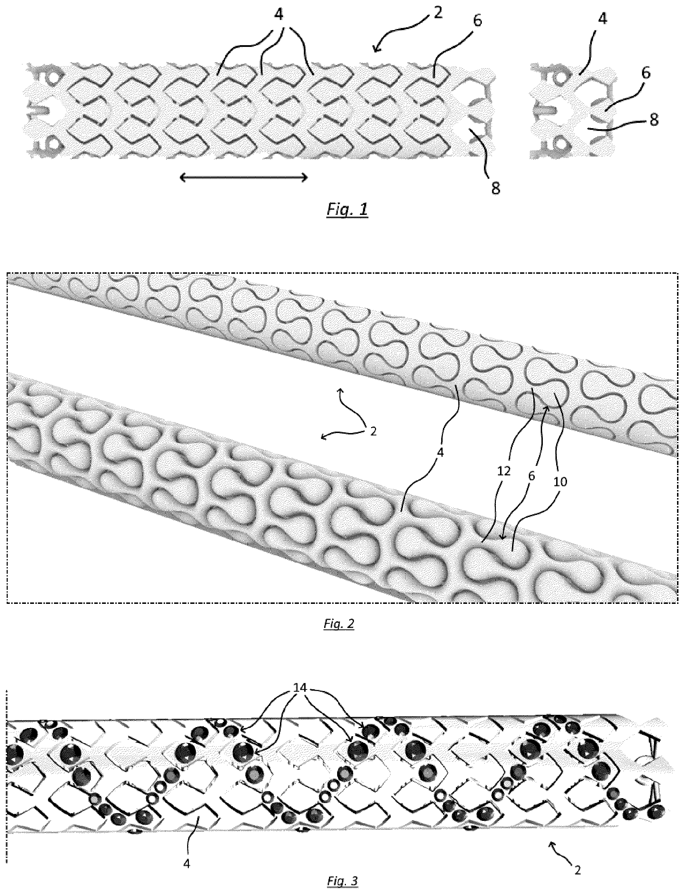

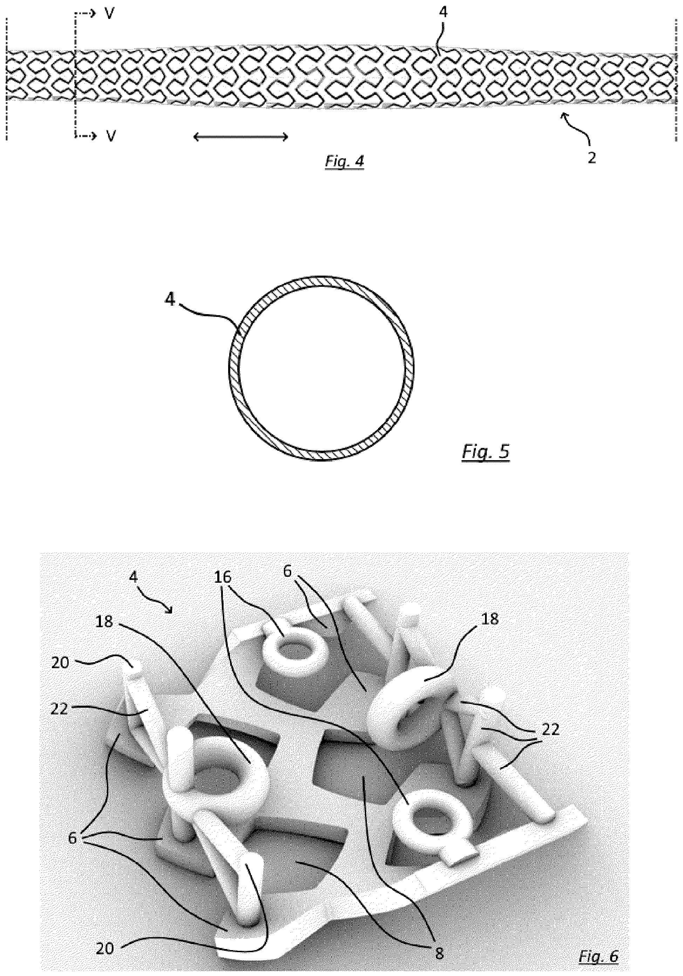

In particular, the shape of links 4 prevents them from separating at least along a direction of longitudinal development of item 2. Item 2 has a longitudinal development, weather it is an openable item 2 or a closed, i.e. circular or annular, item 2. In Figures 1 and 4, an arrow indicates the direction of longitudinal development of the illustrated portion of item 2. The cross-sectional view refers to a plane which is transversal or perpendicular to the longitudinal development.

According to the particular embodiments shown in Figures 1 and 2, item 2 has a constant cross-section throughout its longitudinal development. According to some possible variants, the cross-section of item 2 varies along its longitudinal development. For example, the shape of the cross-section of item 2 does not vary, but its size changes. As an alternative, as shown in the example of Fig. 4, the shape of the cross-section of item 2 varies along its longitudinal development.

With reference to a cross-sectional view of item 2, links 4 are in a radially external position. In particular, links 4 have a plurality of protrusions 6 and recesses 8. These 6, 8 have a shape which is complementary to that of recesses 8 and protrusions 6 of an adjacent link 4. Therefore, protrusions 6 of a link 4 are inserted in recesses 8 of an adjacent link 4. In particular, protrusion 6 has a wider distal part 10 and a narrower proximal part 12. Thus, links 4 fit together much like the pieces of a puzzle. This ensures a strong connection between links 4, which prevents them from separating. In the example of Fig. 1, protrusions 6 of links 4 have a shape resembling a spear head, in particular with a squared profile. In the variant of Fig. 2, protrusions 6 have a drop-like shape. In particular, links 4 on the outer surface are not intertwined in a chain-like fashion. In other words, links 4 on the outer surface are mutually constrained only by means of their respective protrusions 6 and recesses 8.

According to one embodiment, all links 4 have the same shape. In particular, all protrusions 6 and all recesses 8 of such links 4 have the same shape. This is the case, for example, of an item 2 having a constant cross-section throughout its longitudinal development.

In Figures 1-3, items 2 are shown in a straight position, as if they had been laid on a table. However, links 4 make it possible to bend item 2 for wearing it, e.g. around the user's neck or wrist. In fact, between links 4 there is some play, preferably less than 1 mm, which gives item 2 flexibility while keeping links 4 interconnected.

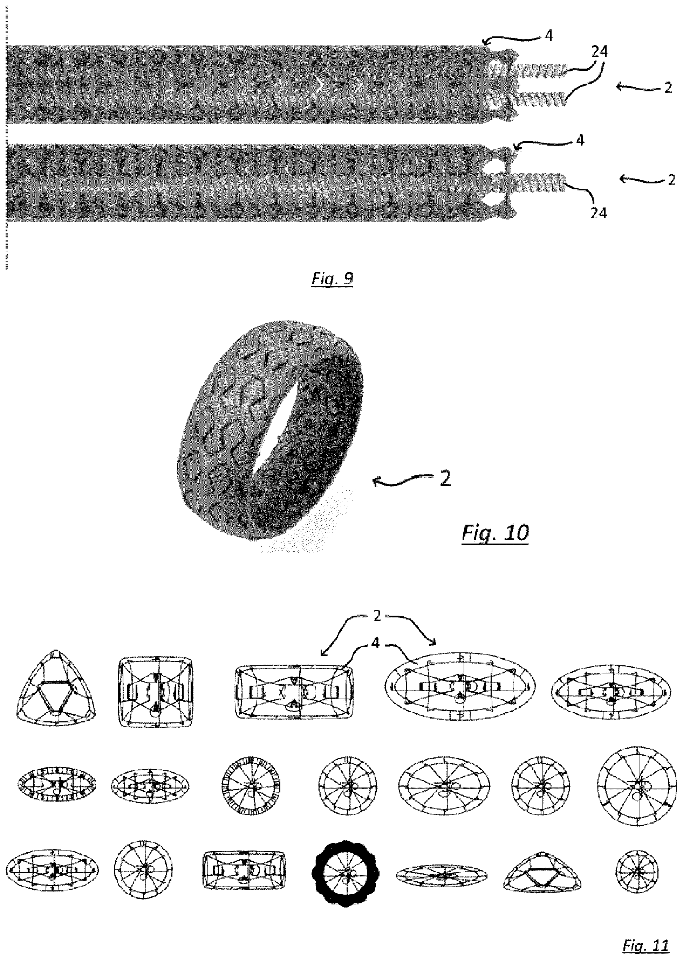

In a cross-sectional view, links 4 may have different shapes, e.g. circular, elliptical, oval, polygonal, rectangular, square, etc. Therefore, the outer surface of item 2 will have such shapes. Figure 11 shows numerous examples of cross-sections of items 2 having different shapes. In the examples of Figures 2 and 5, the outer surface is, in a cross-sectional view, circular in shape. In accordance with some possible embodiments, the outer surface may be either smooth or corrugated. For example, in Figure 2 upper item 2 has a smooth outer surface, while lower item 2 has a slightly corrugated or wavy outer surface.

The method comprises the steps of:
making a 3D print of a prototype having the desired shape of item 2,
obtaining a mould from the prototype,
pouring a material in melted state into the mould,
leaving such melted material to solidify,
removing the solidified material from the mould.

The prototype is conveniently made of a material such as, for example, wax or meltable resin, polymeric material, or rubbery material. A 3D printer creates such prototype. Preferably, item 2 is made of a metallic material or metal alloy such as, for example, gold, silver, steel, titanium, etc. Preferably, the prototype's material has a melting temperature below the melting temperature of the material of the final item 2 (i.e. of the material which is left to solidify in the mould).

If the prototype is in the mould after the mould has been created, there is a step of removing the prototype from the mould. In fact, if the mould is formed around the prototype's body, it will be necessary to remove the prototype from the mould in order to then be able to melt material in said mould. This removal step can be carried out, for example, by melting the prototype, e.g. by putting the prototype and the mould in an oven. The mould will have a cavity with a shape complementary to that of the prototype. The mould is thus created by using the prototype.

When the mould is internally empty, the material, e.g. metal, is poured into the mould, and item 2 will thus have the same shape as the prototype. The mould may conveniently be a cast. For example, the mould is made of plaster, scagliola, silicone, or other materials that may be per se known. For example, the mould is made by pouring a liquid or semi-liquid substance, e.g. a paste, around the prototype and then leaving it to solidify. Preferably, the creation of the prototype by 3D printing is directly followed by the step of creating the mould around the prototype; in such mould the melted material of the final item 2 will then be poured. Therefore, no other moulds or prototypes need the be created between the 3D printing of the prototype and the creation of the mould. The process is thus fast and simple.

According to some possible embodiments, the whole item 2, optionally with the exception of hooking means useful for closing it, if item 2 is of the openable type, is manufactured by 3D printing.

With reference to Figure 3, the method optionally comprises a step of adding a decorative element 14, such as a gem, onto the outer surface of item 2. This step follows the step of removing the solidified material from the mould. Thus, item 2 obtained from the mould does not include any decorative element 14, which will be mounted afterwards, e.g. manually by an operator. Decorative element 14 is fastened to one or more links 4. In the example there are a plurality of decorative elements 14. In particular, links 4 of item 2 in Figure 3 have the same shape as those of item 2 in Figure 1. The gem, which may be of any known type, is not limited to a particular material. In fact, the gem may be a stone of precious, natural, mineral, artificial, etc. material, e.g. diamond, sapphire, zircon, ruby, glass, polymer, artificial diamond, etc. In Figure 3, decorative elements 14 are gems set onto links 4. During the production of item 2 using the mould, one or more housings or anchorage portions may be formed on links 4 for receiving decorative elements 14.

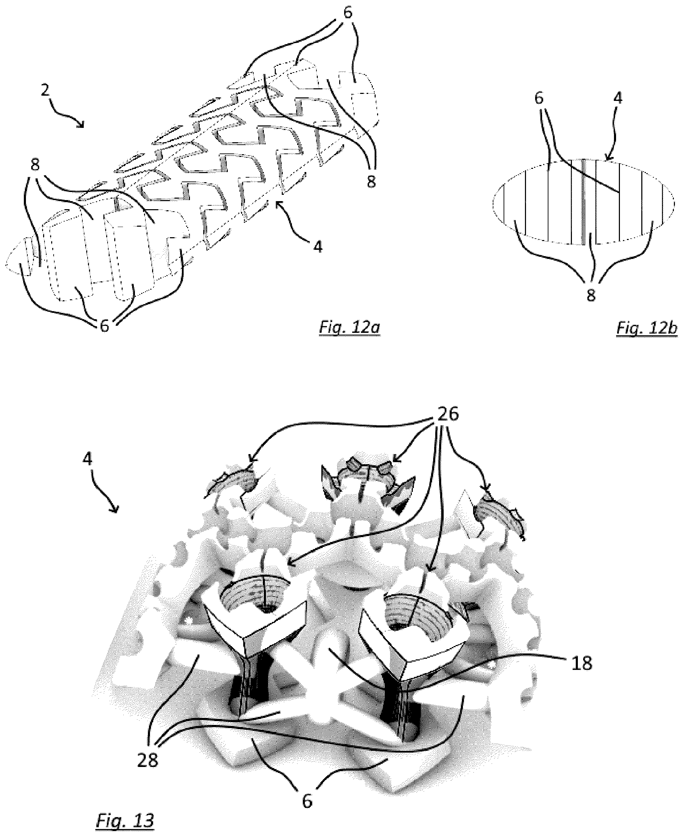

In particular, with reference to Figure 13, link 4 includes at least one housing 26 for receiving a respective decorative element 14, such as a stone, e.g. precious stone. In the example, a link 4 includes a plurality of housings 26. Housing 26 is connected to link 4 through supporting elements, preferably consisting of rods 28. Thus, when the user inserts decorative element 14 into respective housing 26, the supporting elements, i.e. rods 28 in this example, eliminate the risk of link 4 being deformed by the user as the latter exerts the force necessary to set decorative element 14. The at least one housing 26 is made integrally with link 4. The supporting elements, consisting of rods 28 in this example, are made integrally with link 4. The supporting elements are radially internal to link 4 in a cross-sectional view. Housing 26 faces the outer surface of link 4. In Fig. 13, the top surface of link 4 is absent to show the interior of the latter. Optionally, rods 28 may be parts the support structure described below.

According to some possible variants, item 2 includes a support structure in a radially internal position relative to links 4, said support structure being made integrally with links 4. Therefore, the support structure is made using 3D printing and the corresponding mould. In other words, item 2 obtained from the mould already includes the support structure. This results in a sturdier item 2, without its exterior appearance being affected and with the method remaining fast and economical.

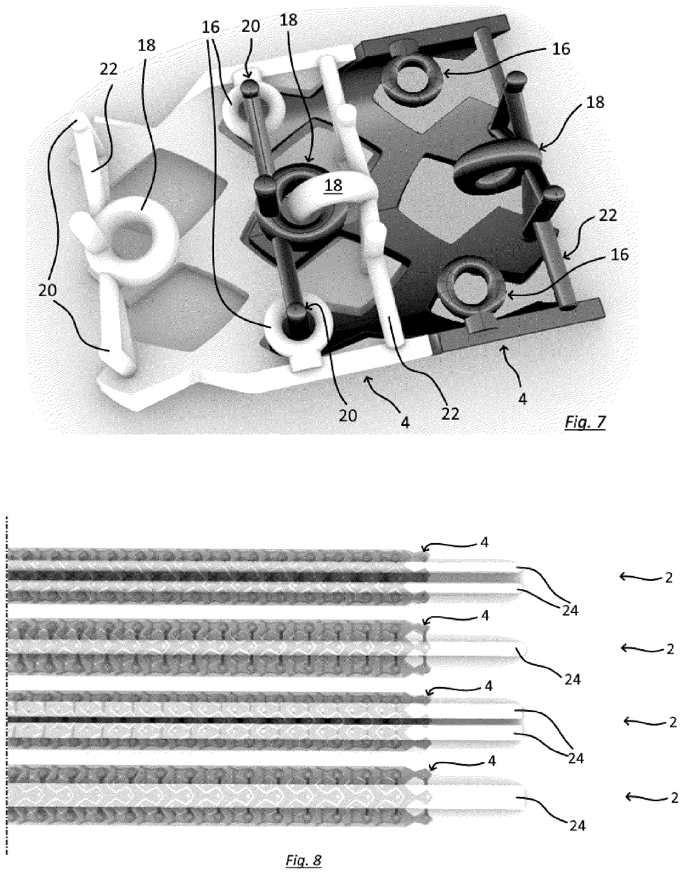

In some possible variants, however, as shown in Fig. 5, the support structure is absent. In such a case, links 4 define a wall that constitutes the outer surface, and nothing is present in a position radially internal to links 4. In a cross-sectional view, such links 4 define a cavity, and there is nothing in such cavity. Thus, according to some possible embodiments, item 2 is hollow within links 4. In particular, the support structure comprises a plurality of interconnected rings 16, 18 or hooks connected to at least some links 4. In the example, rings 16, 18 are provided. The support structure is connected to a plurality of links 4, preferably to all links 4. In a cross-sectional view, rings 16, 18 are radially internal to links 4, and hence to the outer surface of item 2. With reference to Figures 6 and 7, wherein links 4 are displayed in a longitudinal sectional view to show the interior thereof, link 4 is integral with a plurality of rings 16, 18, in particular four rings 16, 18. A plurality of links 4, preferably all links 4, are integral with respective rings 16, 18. In Figure 7 there are two interconnected links 4, and such two links 4 have substantially the same structure, and particularly the same shape. Figure 7 shows two links 4 like the one of Figure 6 joined together.

The rings of one link 4 may be different from one another. In the example, two rings 16 are smaller, while the other two 18 are bigger. Rings 18 are mutually connected when links 4 are joined. The other rings 16 are connected to pins 20 or hooks belonging to the support structure. Therefore, not all rings 16, 18 integral with one link 4 are directly connected to other rings 16, 18 of another link 4. Two rings 18 are proximal to two longitudinal ends of the respective link 4 and are connected to corresponding rings 18 of an adjacent link 4, whereas the other two rings 16 are in a substantially central position in the respective link 4, with reference to the longitudinal direction.

Thus, at the end of the 3D printing process the operator removes item 2 from the mould with rings 16, 18 already connected to each other or to other elements, without requiring the operator to perform any further action; as a matter of fact, such operations would be difficult or even impossible because the support structure is within links 4.

In particular, the support structure may comprise additional elements, such as rods 22. In the example, rods 22 connect rings 18 to link 4.

According to some further variants shown in Figures 8 and 9, the step of removing the solidified material from the mould is followed by a step of inserting an auxiliary support 24 within links 4. Auxiliary support 24 performs the same function as the support structure but, unlike the latter, auxiliary support 24 is formed after the creation of the mould. Therefore, auxiliary support 24 is not made integrally with the rest of item 2 during the 3D printing process, since it is an additional element, e.g. manually added by the user. According to some possible variants, auxiliary support 24 is one of: a spring, a parallelepipedon, a cylinder. In particular, auxiliary support 24 is inserted in a cavity of link 4, with reference to a cross-sectional view.

In particular, the examples of items 2 shown in Figure 11 have either a support structure or an auxiliary support 24.

In general, according to some possible variants, link 4 is hollow in a cross-sectional view and there are no other parts in a radially internal position within link 4 made as one piece with said link 4. In the example of Figure 5, link 4 is hollow and there is nothing inside. Alternatively, link 4 is hollow and in the cavity there is auxiliary support 24.

A couple of auxiliary supports 24 may be inserted in one item, as shown in the first and third images of Fig. 8. The first two images at the top of Fig. 8 show an auxiliary support 24 shaped as a cylinder or tube. The last two images in Fig. 8 show an auxiliary support 24 shaped as a parallelepipedon. In Fig. 9, auxiliary support 24 is a spring, in particular a coil spring. Preferably, the spring is made of metal. The spring is also useful to increase the flexibility of jewellery item 2. In general, auxiliary support 24 may be made of different materials, e.g. polymeric or metallic ones.

In particular, auxiliary support 24 is flexible. Thus, item 2 can be bent, e.g. to be worn around the user's wrist or neck.

In particular, auxiliary support 24 is added when there is no support structure within links 4. Auxiliary support 24 is inserted within links 4 that are hollow in a cross-sectional view, e.g. like the one shown in Fig. 5.

According to the variant shown in Figures 12a and 12b, in a cross-sectional view item 2 is solid within links 4. This means that the cross-section of link 4 is solid. Therefore, link 4 has no cavity. In the example, item 2 comprises a plurality of links 4 that are solid in a cross-sectional view; in particular, all links 4 are solid.

Thanks to the present invention, it is possible to manufacture links 4 of item 2 accurately, eliminating any imperfections that might jeopardize the item's strength and flexibility. Links 4 and all other parts of item 2 can thus be customized with the utmost versatility using a fast and low-cost production process.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Method for making a jewellery item, which comprises the steps of:
• making a 3D print of a prototype having the desired shape of the item (2),
• obtaining a mould from the prototype,
• pouring a material in melted state into the mould,
• leaving such melted material to solidify,
• removing the solidified material from the mould;
wherein the item (2) has an outer surface comprising a plurality of links (4) having a complementary shape and intersecting each other, wherein the shape of the links (4) prevents them from separating.

2. Method according to claim 1, wherein, if the prototype is in the mould after the mould has been created, there is a step of removing the prototype from the mould.

3. Method according to claim 1 or 2, wherein the prototype is a material selected among wax, meltable resin, or a polymeric material.

4. Method according to any one of the preceding claims, wherein, in a cross-sectional view, the item (2) is hollow within the links (4).

5. Method according to any claim from 1 to 3, wherein the item includes a support structure in a radially internal position relative to the links (4), such support structure being made together with the links (4).

6. Method according to claim 5, wherein the support structure comprises a plurality of mutually interconnected rings (16, 18) connected to at least some of the links (4).

7. Method according to any claim from 1 to 3, wherein the step of removing the solidified material from the mould is followed by the step of inserting an auxiliary support (24) within the links (4).

8. Method according to claim 7, wherein the auxiliary support (24) is one of: a spring, a parallelepipedon, a cylinder.

9. Method according to any one of the preceding claims, comprising the step of adding a decorative element (14), such as a gem, onto the outer surface of the item (2).

10. Method according to any one of the preceding claims, wherein the links (4) have a plurality of protrusions (6) and recesses (8), wherein the protrusions (6) of a link (4) are inserted into the recesses (8) of an adjacent link (4).

11. Method according to claim 10, wherein the protrusion (6) has a wider distal part (10) and a narrower proximal part (12).

12. Method according to any claim from 1 to 3, wherein the item (2) comprises a plurality of links (4) having a solid cross-section.

13. Method according to any one of the preceding claims, wherein the link (4) includes at least one housing (26) for receiving a respective decorative element (14), wherein the housing (26) is connected to the link (4) by means of supporting elements; the at least one housing (26) and the supporting elements are made integrally with the link (4).
